# EUROPEAN PATENT APPLICATION

(11) **EP 4 783 402 A1**
(43) Date of publication of application: **29.07.2026**
(21) Application number: 24892635.4
(22) Date of filing: 28.03.2024
(51) Int. Cl.: H02J 3/38, H02J 3/36

(54) **OFFSHORE WIND POWER DIRECT-CURRENT DELIVERY SYSTEM**

(30) Priority: 20.11.2023 CN 202311548726
(71) Applicant: Electric Power Research Institute, China Southern Power Grid, Guangzhou, Guangdong 510663 (CN); China Southern Power Grid Company Limited, Guangzhou, Guangdong 510663 (CN)
(72) Inventor: YUAN, Zhiyong, Guangzhou, Guangdong 510663 (CN); ZOU, Changyue, Guangzhou, Guangdong 510663 (CN); LU, Yuxin, Guangzhou, Guangdong 510663 (CN); PENG, Faxi, Guangzhou, Guangdong 510663 (CN); CAI, Xipeng, Guangzhou, Guangdong 510663 (CN); LI, Yan, Guangzhou, Guangdong 510663 (CN); ZHAO, Xiaobin, Guangzhou, Guangdong 510663 (CN); LI, Weiwei, Guangzhou, Guangdong 510663 (CN); QIAO, Xuebo, Guangzhou, Guangdong 510663 (CN); HOU, Ting, Guangzhou, Guangdong 510663 (CN); LI, Lingfei, Guangzhou, Guangdong 510663 (CN); FENG, Junjie, Guangzhou, Guangdong 510663 (CN); HUANG, Yihong, Guangzhou, Guangdong 510663 (CN); SHI, Youjie, Guangzhou, Guangdong 510663 (CN); XU, Yiliang, Guangzhou, Guangdong 510663 (CN)
(74) Representative: von Hirschhausen, Helge
(86) International application number: PCT/CN2024/084407
(87) International publication number: WO 2025/107468

(57) **Abstract**

An offshore wind power direct-current delivery system, which relates to the technical field of direct-current power transmission. The system comprises an onshore direct-current switching station, multiple offshore converter stations, and multiple onshore converter units; an alternating-current side of each offshore converter station is connected to a wind turbine set, and a direct-current side of each offshore converter station is connected, by means of a direct-current cable, to an input side of a bus bar of the onshore direct-current switching station; an input side of each bus bar is configured with a direct-current switch used to connect to a direct-current cable, an output side of each bus bar is connected to a direct-current overhead line by means of a direct-current circuit breaker, each direct-current overhead line is connected to a direct-current side of an onshore converter unit by means of the direct-current circuit breaker, and each direct-current overhead line is connected to more than one onshore converter unit; a direct-current side of each onshore converter unit is configured with a direct-current high-speed parallel switch and, by means of the direct-current high-speed parallel switch, is connected to a direct-current overhead line, and an alternating-current side of each onshore converter unit is connected to one load center; and the offshore converter stations and the onshore converter units all adopt a half-bridge MMC topology. The present application can achieve reliable and low-cost super-large-capacity direct-current delivery.

## Description

This application claims the priority to Chinese Patent Application No. 202311548726.4, titled "OFFSHORE WIND POWER DIRECT-CURRENT DELIVERY SYSTEM", filed on November 20, 2023 with the China National Intellectual Property Administration, which is incorporated herein by reference in its entirety.

### FIELD

The present disclosure relates to the technical field of direct-current power transmission, and in particular to a system for direct-current transmission of offshore wind power.

### BACKGROUND

In recent years, to promote energy transition, China has implemented policies strongly supporting the development and utilization of offshore wind power. The development of the offshore wind power exhibits a trend from small-scale demonstrations in nearshore, shallow-water areas to large-scale centralized development in far-offshore, deep-water areas. Transmission methods for connecting the offshore wind power to the onshore power grid include high-voltage alternating current transmission and high-voltage direct current transmission. The high-voltage alternating current transmission is suitable for connecting nearshore wind power. When the offshore wind power is transmitted to a location beyond a certain distance from the shore, issues such as excessive charging power leading to voltage rise that requires compensation, and overvoltage issues exist in long-distance alternating current cable transmission. The high-voltage alternating current transmission struggles to meet the demands of transmitting high-capacity, long-distance offshore wind power and is also costly.

The high-voltage direct current transmission offers advantages such as no need for synchronization for the onshore power grid, long transmission distances, and flexible operational control, and is suitable for high-capacity and long-distance power transmission scenarios. Flexible direct-current transmission without commutation failure issues allows independent regulation of active power and reactive power, exhibits low harmonic levels, and is currently the mainstream method for transmitting large-scale far-offshore wind power to the onshore power grid. When achieving ultra-high-capacity transmission, a multi-terminal flexible direct current transmission solution is required. However, stable transmission of ultra-high-capacity power is difficult to achieve with the currently-used direct current transmission system architecture.

### SUMMARY

A system for direct-current transmission of offshore wind power is provided according to embodiments of the present disclosure. The system is capable of achieving reliable and low-cost ultra-high-capacity direct current transmission and enhancing the system stability.

A system for direct-current transmission of offshore wind power is provided according to the present disclosure. The system includes: an onshore direct-current switch station, multiple offshore converter stations, and multiple onshore converter units.

An alternating-current side of each offshore converter station of the multiple offshore converter stations is configured to connect a wind turbine, and a direct-current side of the offshore converter station is configured to connect, via a direct-current cable, an input side of a busbar of the onshore direct-current switch station. The input side of the busbar is provided with a direct-current switch which is connected to the direct-current cable, an output side of the busbar is connected to a direct-current overhead line via a direct-current circuit breaker, the direct-current overhead line is connected to a direct-current side of each onshore converter unit of the multiple onshore converter units via another direct-current circuit breaker, and the direct-current overhead line in each loop is connected to one or more onshore converter units of the multiple onshore converter units. The direct-current side of the onshore converter unit is provided with a direct-current high speed parallel switch and is connected to the direct-current overhead line via the direct-current high speed parallel switch, and an alternating-current side of each of the multiple onshore converter units is configured to connect a load center. A half-bridge MMC topology is employed in each of the multiple offshore converter stations and each of the multiple onshore converter units.

In an embodiment, the direct-current switch which is provided in the input side of the busbar is implemented by a direct-current high speed parallel switch or a direct-current circuit breaker.

In an embodiment, a direct-current energy dissipation apparatus is provided between a positive terminal and a negative terminal of the busbar.

In an embodiment, a symmetric monopole topology is employed in each of the multiple offshore converter stations and each of the multiple onshore converter units. A positive terminal of the busbar of the onshore direct-current switch station is connected to positive terminals of two or more onshore converter units of the multiple onshore converter units via a first direct-current overhead line in each loop, and a negative terminal of the busbar is connected to negative terminals of the onshore converter units which are connected to the first direct-current overhead line in the loop via a second direct-current overhead line in each loop. Positive terminals of the onshore converter units in one loop are connected with each other via a third direct-current overhead line, and negative terminals of the onshore converter units in one loop are connected with each other via a fourth direct-current overhead line. The positive terminal of the busbar is connected to a positive terminal of one offshore converter station of the multiple offshore converter stations via a first direct-current cable in each loop, and the negative terminal of the busbar is connected to a negative terminal of the offshore converter station which is connected to the first direct-current cable in the loop via a second direct-current cable in each loop.

In an embodiment, a symmetric monopole topology is employed in each of the multiple offshore converter stations and each of the multiple onshore converter units. A positive terminal of the busbar of the onshore direct-current switch station is connected to a positive terminal of at least one onshore converter unit of the multiple onshore converter units via a first direct-current overhead line in each loop, and a negative terminal of the busbar is connected to a negative terminal of the onshore converter unit which is connected to the first direct-current overhead line in the loop via a second direct-current overhead line in each loop. A direct-current side of the onshore converter unit in each loop is connected to a direct-current side of at least one onshore converter unit in another loop, positive terminals of all onshore converter units are connected with each other via a third direct-current overhead line, and negative terminals of all onshore converter units are connected with each other via a fourth direct-current overhead line. The positive terminal of the busbar is connected to a positive terminal of one offshore converter station of the multiple offshore converter stations via a first direct-current cable in each loop, and the negative terminal of the busbar is connected to a negative terminal of the offshore converter station which is connected to the first direct-current cable in the loop via a second direct-current cable in each loop.

In an embodiment, the onshore converter unit is provided with a direct-current high speed parallel switch at an outlet of the onshore converter unit connected to the third direct-current overhead line, and the onshore converter unit is provided with another direct-current high speed parallel switch at an outlet of the onshore converter unit connected to the fourth direct-current overhead line.

In an embodiment, a bipolar topology is employed in each of the multiple offshore converter stations and each of the multiple onshore converter units. A positive terminal of the busbar of the onshore direct-current switch station is connected to positive terminals of two or more onshore converter units of the multiple onshore converter units via a first direct-current overhead line in each loop, a negative terminal of the busbar is connected to negative terminals of the onshore converter units which are connected to the first direct-current overhead line in the loop via a second direct-current overhead line in each loop, and a neutral terminal of the busbar is connected to neutral terminals of the onshore converter units via a fifth direct-current overhead line in each loop. The neutral terminal of the busbar is connected to the fifth direct-current overhead line via an alternating-current circuit breaker, and the neutral terminals of the onshore converter units are connected to the fifth direct-current overhead line via alternating-current circuit breakers. The positive terminals of the onshore converter units in one loop are connected with each other via a third direct-current overhead line, the negative terminals of the onshore converter units in one loop are connected with each other via a fourth direct-current overhead line, and the neutral terminals of the onshore converter units in one loop are connected with each other via a sixth direct-current overhead line. The positive terminal of the busbar is connected to a positive terminal of one offshore converter station of the multiple offshore converter stations via a first direct-current cable in each loop, the negative terminal of the busbar is connected to a negative terminal of the offshore converter station which is connected to the first direct-current cable in the loop via a second direct-current cable in each loop, the neutral terminal of the busbar is connected to a neutral terminal of the offshore converter station which is connected to the first direct-current cable in the loop via a third direct-current cable in each loop, and the neutral terminal of the busbar is connected to the third direct-current cable via another alternating-current circuit breaker.

In an embodiment, a bipolar topology is employed in each of the multiple offshore converter stations and each of the multiple onshore converter units. A positive terminal of the busbar of the onshore direct-current switch station is connected to a positive terminal of at least one onshore converter unit of the multiple onshore converter units via a first direct-current overhead line in each loop, a negative terminal of the busbar is connected to a negative terminal of the onshore converter unit which is connected to the first direct-current overhead line in the loop via a second direct-current overhead line in each loop, and a neutral terminal of the busbar is connected to a neutral terminal of the onshore converter unit via a fifth direct-current overhead line in each loop. The neutral terminal of the busbar is connected to the fifth direct-current overhead line via an alternating-current circuit breaker, and the neutral terminal of the onshore converter unit is connected to the fifth direct-current overhead line via another alternating-current circuit breaker. A direct-current side of the onshore converter unit in each loop is connected to a direct-current side of at least one onshore converter unit in another circuit, positive terminals of all onshore converter units are connected with each other via a third direct-current overhead line, negative terminals of all onshore converter units are connected with each other via a fourth direct-current overhead line, and neutral terminals of all onshore converter units are connected with each other via a sixth direct-current overhead line. The positive terminal of the busbar is connected to a positive terminal of one offshore converter station of the multiple offshore converter stations via a first direct-current cable in each loop, the negative terminal of the busbar is connected to a negative terminal of the offshore converter station which is connected to the first direct-current cable in the loop via a second direct-current cable in each loop, the neutral terminal of the busbar is connected to a neutral terminal of the offshore converter station which is connected to the first direct-current cable in the loop via a third direct-current cable in each loop, and the neutral terminal of the busbar is connected to the third direct-current cable via an alternating-current circuit breaker.

In an embodiment, the onshore converter unit is provided with a direct-current high speed parallel switch at an outlet of the onshore converter unit connected to the third direct-current overhead line, the onshore converter unit is provided with another direct-current high speed parallel switch at an outlet of the onshore converter unit connected to the fourth direct-current overhead line, and the onshore converter unit is provided with an alternating-current circuit breaker at an outlet of the onshore converter unit connected to the sixth direct-current overhead line.

In an embodiment, the alternating-current sides of two or more onshore converter units of the multiple onshore converter units are connected with each other.

It can be seen from the above technical solutions that the embodiments of the present disclosure have the following advantages.

The system for direct-current transmission of offshore wind power according to the present disclosure includes an onshore direct-current switch station, multiple offshore converter stations, and multiple onshore converter units. A half-bridge MMC topology is employed in each of the multiple offshore converter stations and each of the multiple onshore converter units. The system transmits power via direct-current cables on the offshore side and via direct-current overhead lines on the onshore side. The offshore side and the onshore side are connected through the busbar of the onshore direct-current switch station, which reduces the transmission cost of high-capacity offshore wind power and the number of power transmission corridors, and can support transmission requirements at the multi-gigawatt scale. In addition, both ends of the direct-current overhead lines are provided with direct-current circuit breakers to achieve fault isolation. When the half-bridge MMC topology without direct-current fault clearing capability is employed in each of the multiple offshore converter stations and each of the multiple onshore converter units, reliable fault isolation of the system can be achieved in the event of a fault, thereby enhancing system stability.

### BRIEF DESCRIPTION OF THE DRAWINGS

To clearly describe technical solutions in the embodiments of the present disclosure or in the related technology, drawings to be used in the description of the embodiments or the related technology are briefly introduced hereinafter. Apparently, the drawings described below show merely some embodiments of the present disclosure, and those skilled in the art may obtain other drawings based on the drawings without any creative effort.
FIG. 1 is a schematic structural diagram of a system for direct-current transmission of offshore wind power according to an embodiment of the present disclosure;
FIG. 2 is a schematic diagram of a topology structure of a converter station which employs a symmetric monopole topology according to an embodiment of the present disclosure;
FIG. 3 is a schematic structural diagram of a system for direct-current transmission of offshore wind power which employs a symmetric monopole topology with single-circuit overhead lines according to an embodiment of the present disclosure;
FIG. 4 is a schematic structural diagram of a system for direct-current transmission of offshore wind power which employs a symmetric monopole topology with multi-circuit overhead lines according to an embodiment of the present disclosure;
FIG. 5 is a schematic structural diagram of a system for direct-current transmission of offshore wind power which employs a bipolar topology with single-circuit overhead lines according to an embodiment of the present disclosure;
FIG. 6 is a schematic structural diagram of a system for direct-current transmission of offshore wind power which employs a bipolar topology with multi-circuit overhead lines according to an embodiment of the present disclosure; and
FIG. 7 is a schematic structural diagram of a system for direct-current transmission of offshore wind power which employs a bipolar topology with multi-circuit overhead lines according to another embodiment of the present disclosure.

### DETAILED DESCRIPTION

Hereinafter technical solutions in embodiments of the present disclosure are described clearly and completely in conjunction with the drawings in the embodiments of the present disclosure. Apparently, the described embodiments are only some rather than all embodiments of the present disclosure. Based on the embodiments of the present disclosure, all other embodiments obtained by those skilled in the art without any creative effort fall into the protection scope of the present disclosure.

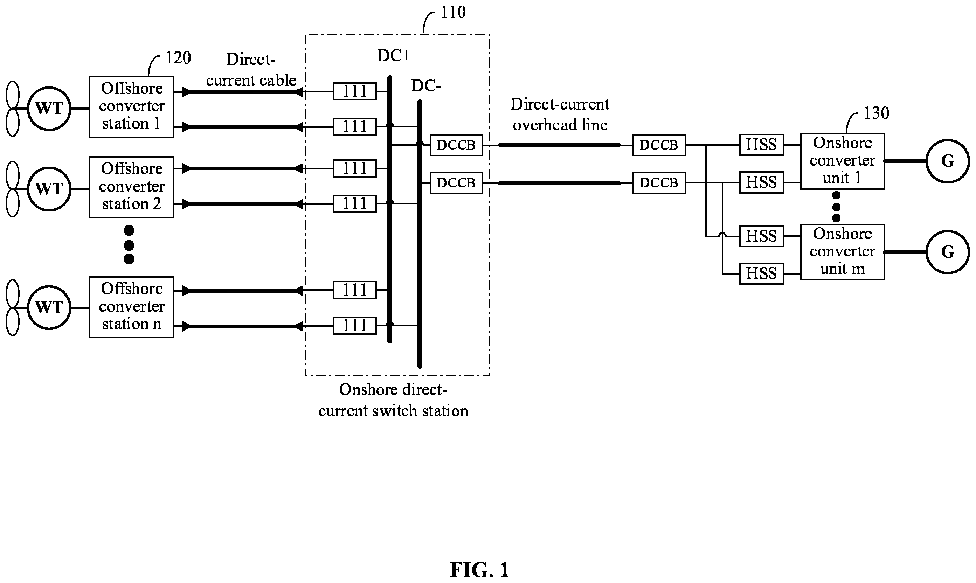

As shown in FIG. 1, a system for direct-current transmission of offshore wind power is provided according to an embodiment of the present disclosure. The system includes: an onshore direct-current switch station 110, multiple offshore converter stations 120, and multiple onshore converter units 130. A half-bridge MMC topology is employed in each of the multiple offshore converter stations 120 and each of the multiple onshore converter units 130. An alternating-current side of each offshore converter station 120 of the multiple offshore converter stations 120 is configured to connect a wind turbine WT, and a direct-current side of the offshore converter station 120 is connected to, via a direct-current cable, an input side of a busbar of the onshore direct-current switch station 110. The input side of the busbar is provided with a direct-current switch 111 which is connected to the direct-current cable, an output side of the busbar is connected to a direct-current overhead line via a direct-current circuit breaker DCCB, the direct-current overhead line is connected to a direct-current side of each onshore converter unit 130 of the multiple onshore converter units 130 via another direct-current circuit breaker DCCB, and the direct-current overhead line in each loop is connected to one or more onshore converter units 130 of the multiple onshore converter units 130. The direct-current side of the onshore converter unit 130 is provided with a direct-current high speed parallel switch HSS and is connected to the direct-current overhead line via the direct-current high speed parallel switch HSS, and an alternating-current side of each of the multiple onshore converter units 130 is configured to connect a load center G.

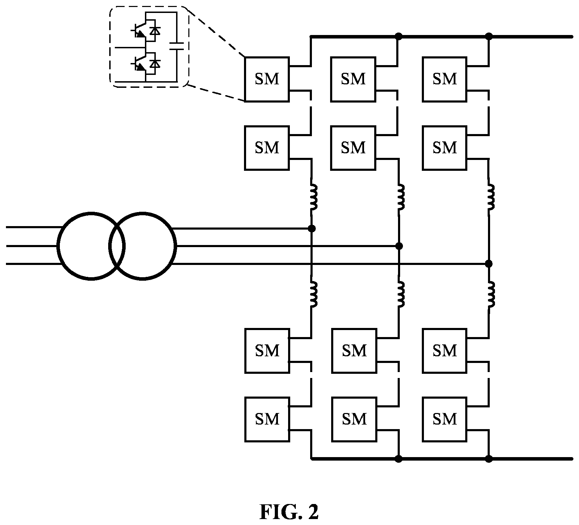

A core component of a Modular Multilevel Converter (MMC) is sub-modules connected in series within its bridge arms. The half-bridge MMC topology refers to a topology in which half-bridge sub-modules are employed. The half-bridge MMC topology is widely used in systems for direct-current transmission of offshore wind power due to its low cost and broad applicability. However, the half-bridge sub-modules lack the capability to clear direct-current faults. Once a fault occurs in the direct-current line of a flexible direct-current transmission system, converters and energy storage components at the direct-current side rapidly discharge, causing the fault current to reach the withstand limit of power electronic devices within milliseconds, thereby threatening safe operation of devices and the system. Referring to FIG. 2 (taking a symmetric monopole topology as an example), in this embodiment, both offshore converters and onshore converters employ a half-bridge MMC topology and lack direct-current fault clearing capability. The direct-current circuit breakers DCCB are provided on both ends of the direct-current overhead lines to achieve rapid clearance and isolation of direct-current faults. When a direct-current fault occurs, fault isolation can be achieved through the direct-current circuit breakers DCCB on both ends of the direct-current overhead lines, enhancing operational stability of the system.

In addition, in this embodiment, a transmission method of employing direct-current cables on the offshore side and direct-current overhead lines on the onshore side is proposed. Compared with the method of using direct-current land cables for onshore power transmission in Europe, this method can greatly reduce costs. Compared with the current practice in China of using alternating-current overhead lines for onshore power transmission, the number of power transmission corridors can be reduced in transmission of high-capacity offshore wind power. Within capacity limits, a direct-current overhead line in each circuit can be connected to multiple onshore converter units 130, further reducing the number of power transmission corridors and the costs. In this embodiment, an onshore direct-current switch station 110 is established on land to connect the direct-current cables and the direct-current overhead lines, facilitating the transition between offshore cables and overhead lines. Moreover, during long-distance power transmission, the direct-current switches 111 within the onshore direct-current switch station 110 can be used to isolate faulty sections of the line, preventing the entire power transmission line from being affected during fault clearance and improving the flexibility of power supply in the system.

The direct-current cables include direct-current submarine cables and/or direct-current land cables. Since the busbar may be located in an onshore area at a certain distance from the coastline, direct-current submarine cables are employed for offshore transmission, and direct-current land cables are used for transmission between the coastline and the busbar.

In some embodiments, an onshore converter unit refers to an onshore converter station. In some other embodiments, an onshore converter unit refers to a single converter unit within an individual onshore converter station.

In some embodiments, different onshore converter units may be connected to the same load center or may be connected to different load centers respectively.

The system for direct-current transmission of offshore wind power according to the present disclosure includes an onshore direct-current switch station 110, multiple offshore converter stations 120, and multiple onshore converter units 130. A half-bridge MMC topology is employed in each of the multiple offshore converter stations 120 and each of the multiple onshore converter units 130. The system transmits power via direct-current cables on the offshore side and via direct-current overhead lines on the onshore side. The offshore side and the onshore side are connected through the busbar of the onshore direct-current switch station 110, which reduces the transmission cost of high-capacity offshore wind power and the number of power transmission corridors, and can support transmission requirements at the multi-gigawatt scale. In addition, both ends of the direct-current overhead lines are provided with direct-current circuit breakers DCCB to achieve fault isolation. When the half-bridge MMC topology without direct-current fault clearing capability is employed in each of the multiple offshore converter stations 120 and each of the multiple onshore converter units 130, reliable fault isolation of the system can be achieved in the event of a fault, thereby enhancing system stability.

In an embodiment, the direct-current switch 111 which is provided in the input side of the busbar is implemented by a direct-current circuit breaker DCCB.

The direct-current circuit breaker DCCB is configured in the input side of the busbar, and the input side of the busbar is connected to a direct-current cable via the direct-current circuit breaker DCCB. This enables the direct-current circuit breaker DCCB to interrupt the short-circuit current in the direct-current cable in the event of a direct-current fault, thereby achieving fault isolation.

In an embodiment, direct-current switch 111 which is provided in the input side of the busbar is implemented by a direct-current high speed parallel switch HSS.

The direct-current high speed parallel switch HSS is configured in the input side of the busbar, and the input side of the busbar is connected to a direct-current cable via the direct-current high speed parallel switch HSS, which enables fault isolation and enhances the reliability and availability of the entire direct-current system. Using the direct-current high speed parallel switch HSS ensures no interruption in power of the direct-current system during the commissioning or decommissioning of converter stations. Although the direct-current high speed parallel switch HSS cannot interrupt large direct-current currents, it offers a lower cost, a smaller size, and a simpler structure compared with the direct-current circuit breaker DCCB. Reliable fault isolation of the system can also be achieved by using the direct-current high speed parallel switch HSS in conjunction with the direct-current circuit breaker DCCB in the direct-current overhead lines.

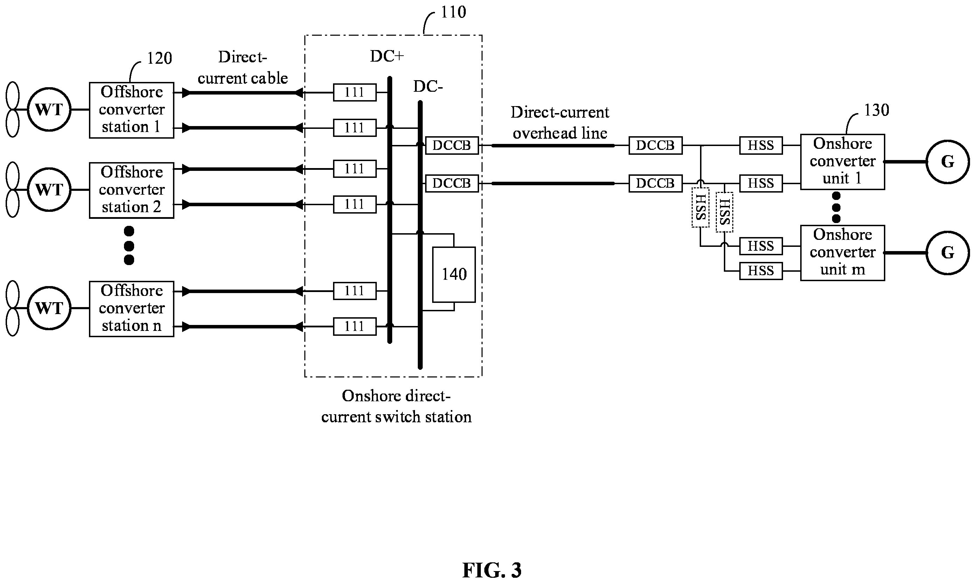

As shown in FIG. 3, in an embodiment, a direct-current energy dissipation apparatus 140 is provided between a positive terminal and a negative terminal of the busbar. A first terminal of the direct-current energy dissipation apparatus 140 is connected to the positive terminal DC+ of the busbar, and a second terminal of the direct-current energy dissipation apparatus 140 is connected to the negative terminal DC- of the busbar.

To further ensure the fault clearing capability of the system in the event of a direct-current fault, the direct-current energy dissipation apparatus 140 is configured between the positive terminal and the negative terminal of the busbar. After the direct-current circuit breakers DCCB clears the direct-current fault, the direct-current energy dissipation apparatus 140 can operate at a full voltage to balance surplus power during the direct-current fault.

In an embodiment, if the offshore converter stations 120 or the wind turbines are provided with energy dissipation apparatuses, the direct-current energy dissipation apparatus 140 may not be configured. The energy dissipation apparatuses of the offshore converter stations 120 or the wind turbines are utilized to achieve surplus power balancing. However, this method imposes higher configuration requirements on the offshore converter stations 120 or the wind turbines, resulting in greater cost investment.

Referring to FIG. 3, in an embodiment, a symmetric monopole topology is employed in each of the multiple offshore converter stations 120 and each of the multiple onshore converter units 130. A positive terminal DC+ of the busbar of the onshore direct-current switch station 110 is connected to positive terminals of two or more onshore converter units 130 of the multiple onshore converter units 130 via a first direct-current overhead line in each loop, a negative terminal DC- of the busbar is connected to negative terminals of the onshore converter units 130 which are connected to the first direct-current overhead line in the loop via a second direct-current overhead line in each loop. The positive terminals of the onshore converter units 130 in one loop are connected with each other via a third direct-current overhead line, and the negative terminals of the onshore converter units 130 in one loop are connected with each other via a fourth direct-current overhead line. The positive terminal DC+ of the busbar is connected to a positive terminal of one offshore converter station 120 of the multiple offshore converter stations 120 via a first direct-current cable in each loop, and the negative terminal DC- of the busbar is connected to a negative terminal of the offshore converter station 120 which is connected to the first direct-current cable in the loop via a second direct-current cable in each loop.

In this embodiment, a converter station employing the symmetric monopole topology is adopted. For converter stations in large-scale offshore wind power transmission systems, the symmetric monopole topology adopts an odd or an even total number of flexible direct-current transformers, providing greater flexibility for optimizing system equipment configuration. The capacity of a single onshore converter unit 130 is greater than that of a single offshore converter station 120. Within the capacity limit, a single-circuit overhead line can be simultaneously connected to multiple converter stations. In an embodiment, the third direct-current overhead line is provided with direct-current high speed parallel switches HSS, and the fourth direct-current overhead line is provided with direct-current high speed parallel switches HSS. When fault isolation is required for the third direct-current overhead line or the fourth direct-current overhead line, particularly when an electrical distance between the third direct-current overhead line and the fourth direct-current overhead line reaches a certain threshold, the isolation can be achieved by using the direct-current high speed parallel switches HSS, enhancing the stability of the system.

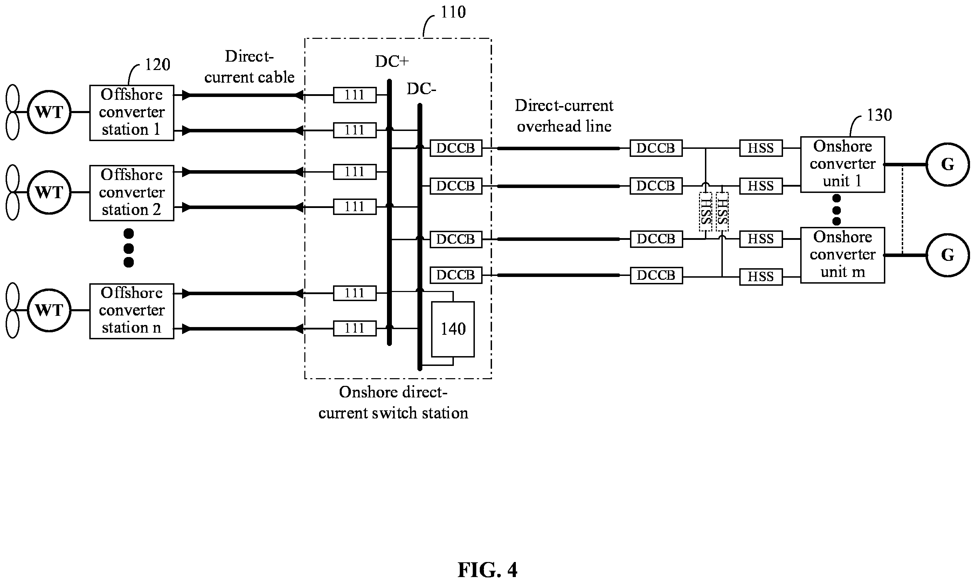

As shown in FIG. 4, in an embodiment, a symmetric monopole topology is employed in each of the multiple offshore converter stations 120 and each of the multiple onshore converter units 130, and the direct-current overhead lines employ multi-circuit connection. A positive terminal DC+ of the busbar of the onshore direct-current switch station 110 is connected to a positive terminal of at least one onshore converter unit 130 of the multiple onshore converter units 130 via a first direct-current overhead line in each loop, and a negative terminal DC- of the busbar is connected to a negative terminal of the onshore converter unit 130 which is connected to the first direct-current overhead line in the loop via a second direct-current overhead line in each loop. A direct-current side of the onshore converter unit 130 in each loop is connected to a direct-current side of at least one onshore converter unit 130 in another circuit, positive terminals of all onshore converter units 130 are connected with each other via a third direct-current overhead line, and negative terminals of all onshore converter units 130 are connected with each other via a fourth direct-current overhead line. The positive terminal DC+ of the busbar is connected to a positive terminal of one offshore converter station 120 of the multiple offshore converter stations 120 via a first direct-current cable in each loop, and the negative terminal DC- of the busbar is connected to a negative terminal of the offshore converter station 120 which is connected to the first direct-current cable in the loop via a second direct-current cable in each loop.

In this embodiment, the term "multi-circuit" refers to configurations with two or more circuits. By using the multi-circuit connection, when a fault occurs in one circuit, the other circuits can maintain the normal operation of the onshore converter unit 130 and the respective load center G corresponding to the faulty circuit, thereby ensuring reliable power supply. In an embodiment, the onshore converter unit is provided with a direct-current high speed parallel switch HSS at an outlet of the onshore converter unit being connected to the third direct-current overhead line, and the onshore converter unit is provided with another direct-current high speed parallel switch HSS at an outlet of the onshore converter unit being connected to the fourth direct-current overhead line. When fault isolation is required for the third direct-current overhead line or the fourth direct-current overhead line, particularly when an electrical distance between the third direct-current overhead line and the fourth direct-current overhead line reaches a certain threshold, the isolation can be achieved by using the direct-current high speed parallel switches HSS, enhancing the stability of the system.

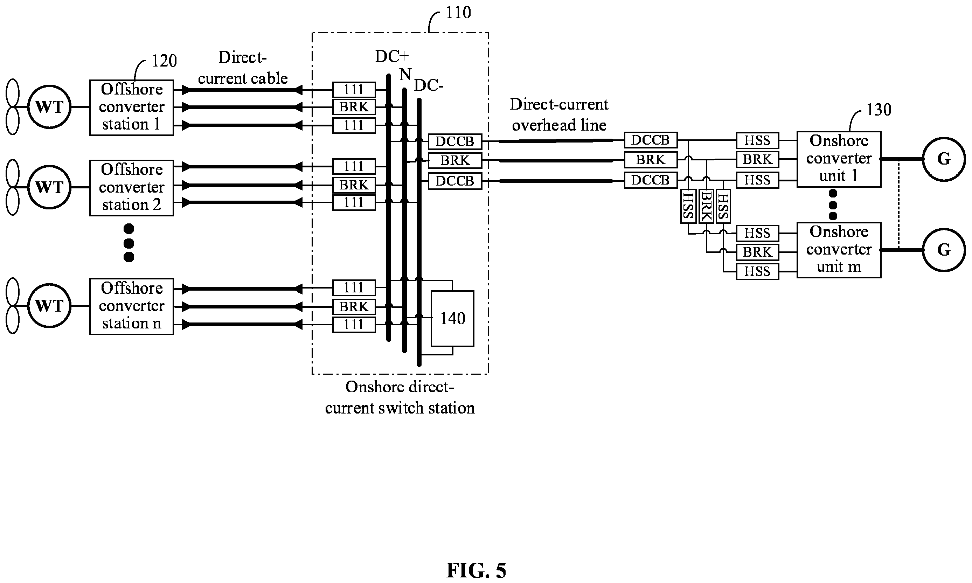

As shown in FIG. 5, in an embodiment, a bipolar topology is employed in each of the multiple offshore converter stations 120 and each of the multiple onshore converter units 130. A positive terminal DC+ of the busbar of the onshore direct-current switch station 110 is connected to positive terminals of two or more onshore converter units 130 of the multiple onshore converter units 130 via a first direct-current overhead line in each loop, a negative terminal DC- of the busbar is connected to negative terminals of the onshore converter units 130 which are connected to the first direct-current overhead line in the loop via a second direct-current overhead line in each loop, and a neutral terminal N of the busbar is connected to neutral terminals of the onshore converter units 130 via a fifth direct-current overhead line in each loop. The neutral terminal N of the busbar is connected to the fifth direct-current overhead line via an alternating-current circuit breaker BRK, and the neutral terminals of the onshore converter units 130 are connected to the fifth direct-current overhead line via alternating-current circuit breakers BRK. The positive terminals of the onshore converter units 130 in one loop are connected with each other via a third direct-current overhead line, the negative terminals of the onshore converter units 130 in one loop are connected with each other via a fourth direct-current overhead line, and the neutral terminals of the onshore converter units 130 in one loop are connected with each other via a sixth direct-current overhead line. The positive terminal DC+ of the busbar is connected to a positive terminal of one offshore converter station 120 of the multiple offshore converter stations 120 via a first direct-current cable in each loop, the negative terminal DC- of the busbar is connected to a negative terminal of the offshore converter station 120 which is connected to the first direct-current cable in the loop via a second direct-current cable in each loop, the neutral terminal N of the busbar is connected to a neutral terminal of the offshore converter station 120 which is connected to the first direct-current cable in the loop via a third direct-current cable in each loop, and the neutral terminal N of the busbar is connected to the third direct-current cable via another alternating-current circuit breaker BRK.

When employing a bipolar topology, fault currents in the circuit can be isolated through the operation of direct-current circuit breakers DCCB installed in the terminal lines. The neutral terminal N of the busbar is provided with an alternating-current circuit breaker BRK and is connected to the fifth direct-current overhead line via the alternating-current circuit breaker BRK. Similarly, the neutral terminal of each of the multiple onshore converter units 130 is provided with another alternating-current circuit breaker BRK and is connected to the fifth direct-current overhead line via the alternating-current circuit breaker BRK. The alternating-current circuit breakers BRKs with low costs contribute to reducing costs of the system. Similarly, on the offshore side, the neutral terminal N of the busbar is provided with another alternating-current circuit breaker BRK and is connected to the third direct-current cable via the alternating-current circuit breaker BRK

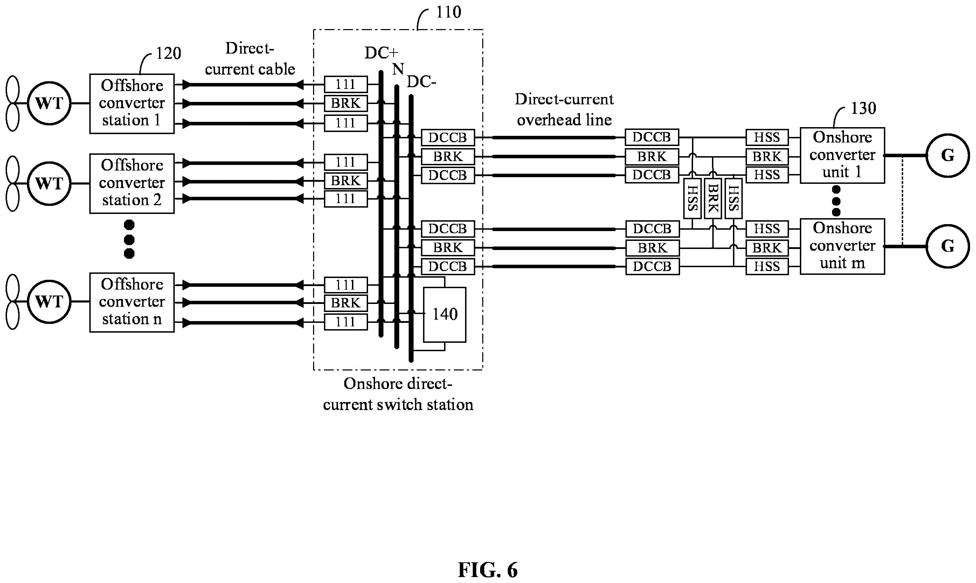

As shown in FIG. 6, in an embodiment, a bipolar topology is employed in each of the multiple offshore converter stations 120 and each of the multiple onshore converter units 130. A positive terminal DC+ of the busbar of the onshore direct-current switch station 110 is connected to a positive terminal of at least one onshore converter unit 130 of the multiple onshore converter units 130 via a first direct-current overhead line in each loop, a negative terminal DC- of the busbar is connected to a negative terminal of the onshore converter unit 130 which is connected to the first direct-current overhead line in the loop via a second direct-current overhead line in each loop, and a neutral terminal N of the busbar is connected to a neutral terminal of the onshore converter unit 130 via a fifth direct-current overhead line in each loop. The neutral terminal N of the busbar is connected to the fifth direct-current overhead line via an alternating-current circuit breaker BRK, and the neutral terminal of the onshore converter unit 130 is connected to the fifth direct-current overhead line via another alternating-current circuit breaker BRK. A direct-current side of the onshore converter unit 130 in each loop is connected to a direct-current side of at least one onshore converter unit 130 in another loop, positive terminals of all onshore converter units 130 are connected with each other via a third direct-current overhead line, negative terminals of all onshore converter units 130 are connected with each other via a fourth direct-current overhead line, and neutral terminals of all onshore converter units 130 are connected with each other via a sixth direct-current overhead line. The positive terminal DC+ of the busbar is connected to a positive terminal of one offshore converter station 120 of the multiple offshore converter stations 120 via a first direct-current cable in each loop, the negative terminal DC- of the busbar is connected to a negative terminal of the offshore converter station 120 which is connected to the first direct-current cable in the loop via a second direct-current cable in each loop, the neutral terminal N of the busbar is connected to a neutral terminal of the offshore converter station 120 which is connected to the first direct-current cable in the loop via a third direct-current cable in each loop, and the neutral terminal N of the busbar is connected to the third direct-current cable via an alternating-current circuit breaker BRK.

In this embodiment, by interconnecting the multiple circuits, when a fault occurs in one circuit, the other circuits can maintain the normal operation of the onshore converter unit 130 and the respective load center G corresponding to the faulty circuit, thereby ensuring reliable power supply. When employing the bipolar topology, since isolation is not required for faults in the neutral line, the neutral terminal N of the busbar is provided with an alternating-current circuit breaker BRK and is connected to the fifth direct-current overhead line via the alternating-current circuit breaker BRK. Similarly, the neutral terminal of each of the multiple onshore converter units 130 is provided with another alternating-current circuit breaker BRK and is connected to the fifth direct-current overhead line via the alternating-current circuit breaker BRK. The alternating-current circuit breakers BRKs with low costs contribute to reducing costs of the system. Similarly, on the offshore side, the neutral terminal N of the busbar is provided with another alternating-current circuit breaker BRK and is connected to the third direct-current cable via the alternating-current circuit breaker BRK. In an embodiment, the onshore converter unit is provided with a direct-current high speed parallel switch HSS at an outlet of the onshore converter unit being connected to the third direct-current overhead line, the onshore converter unit is provided with another direct-current high speed parallel switch HSS at an outlet of the onshore converter unit being connected to the fourth direct-current overhead line, and the onshore converter unit is provided with an alternating-current circuit breaker BRK at an outlet of the onshore converter unit being connected to the sixth direct-current overhead line.

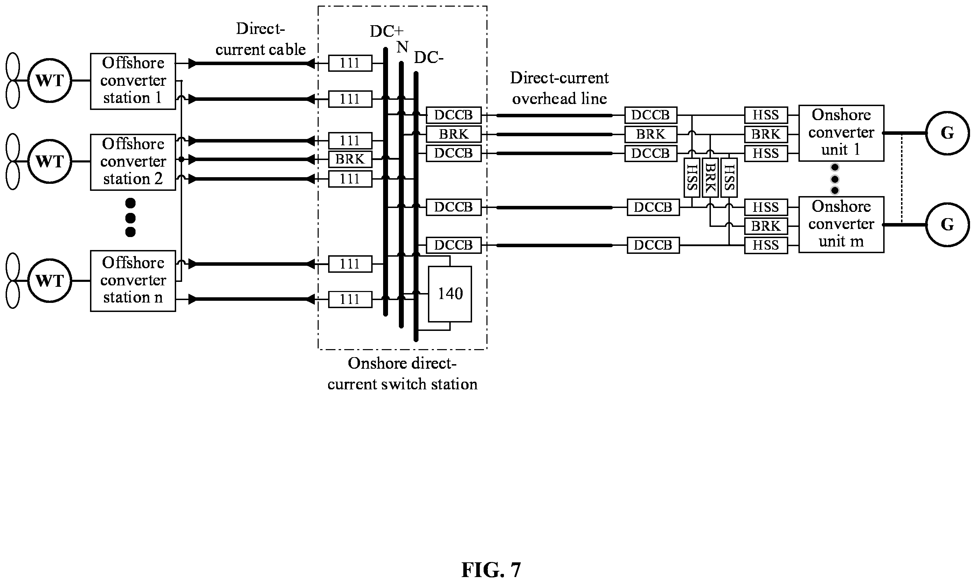

As shown in FIG. 7, in an embodiment, when a bipolar topology is employed in each of the offshore converter stations 120 and each of the onshore converter units 130, a shared neutral line can be used on the offshore side to reduce costs, and a shared neutral line can be used on the onshore side to reduce costs.

Referring to FIG. 4 to FIG. 7, in an embodiment, the alternating-current sides of two or more onshore converter units 130 of the multiple onshore converter units 130 are connected with each other.

In this embodiment, the alternating-current sides of the two or more onshore converter units 130 are connected with each other to integrate the onshore converter units 130 into the power grid constructed at load centers G. In this way, independent load allocation is not required in the onshore converter units 130. The onshore converter units 130 with their alternating-current sides interconnected and their respective connected load centers G collectively form a large-scale power grid. The large-scale power grid is capable of automatically coordinating loads internally, improving the safety and stability of power grid operation.

Finally, it should also be noted that in the present disclosure, relational terms such as first and second are only used to distinguish one entity or operation from another, and do not necessarily require or imply that any such actual relationship or order exists in these entities or operations. Furthermore, the term "comprise", "include" or any other variation thereof is intended to cover a non-exclusive inclusion, so that a process, a method, an article, or a device including a set of elements includes not only those elements, but also other elements not expressly listed or elements inherent in such a process, method, article, or device. Unless expressively limited, the statement "including a..." does not exclude the case that other similar elements may exist in the process, method, article or device including the set of elements.

Moreover, terms such as "first", "second" and the like are merely for description, and should not be construed as indicating or implying relative importance, or implicitly indicating the number of technical features being referred to. Therefore, a feature defined with "first" and "second" may explicitly or implicitly include at least one of the features. In the description of this specification, "multiple/a plurality of" means at least two, such as two or three, unless otherwise expressly and specifically limited.

It should be noted that, an element being "connected" to another element may indicate that the element is directly connected to the other element, or the element is connected to the other element through an intermediate element. In addition, the "connection" in the embodiments of the present disclosure should be understood as "electrical connection", "communication connection", or the like if the connected circuits, modules, units, or the like have electrical signal or data transmission to each other.

The embodiments in the present specification are described in a progressive manner, and each of the embodiments focuses on its differences from the other embodiments. Various embodiments may be combined with each other as needed. The same or similar parts among the embodiments may be referred to each other.

The disclosed embodiments are described above so that those skilled in the art can implement or use the present disclosure. Various modifications made to the embodiments are apparent to those skilled in the art. The general principle defined herein may be implemented in other embodiments without departing from the spirit and scope of the present disclosure. Therefore, the present disclosure should not be limited to the embodiments disclosed herein, but has the widest scope in accordance to the concept and the novel features disclosed herein.

## Claims

1. A system for direct-current transmission of offshore wind power, comprising: an onshore direct-current switch station, a plurality of offshore converter stations, and a plurality of onshore converter units, wherein
an alternating-current side of each offshore converter station of the plurality of offshore converter stations is configured to connect a wind turbine, a direct-current side of the offshore converter station is connected to, via a direct-current cable, an input side of a busbar of the onshore direct-current switch station,
the input side of the busbar is provided with a direct-current switch which is connected to the direct-current cable, an output side of the busbar is connected to a direct-current overhead line via a direct-current circuit breaker, the direct-current overhead line is connected to a direct-current side of each onshore converter unit of the plurality of onshore converter units via another direct-current circuit breaker, and the direct-current overhead line in each loop is connected to one or more onshore converter units of the plurality of onshore converter units,
the direct-current side of the onshore converter unit is provided with a direct-current high speed parallel switch and is connected to the direct-current overhead line via the direct-current high speed parallel switch, and an alternating-current side of each of the plurality of onshore converter units is configured to connect a load center, and
a half-bridge MMC topology is employed in each of the plurality of offshore converter stations and each of the plurality of onshore converter units.

2. The system according to claim 1, wherein the direct-current switch which is provided in the input side of the busbar is implemented by a direct-current high speed parallel switch or a direct-current circuit breaker.

3. The system according to claim 1 or 2, wherein a direct-current energy dissipation apparatus is provided between a positive terminal and a negative terminal of the busbar.

4. The system according to claim 1, wherein a symmetric monopole topology is employed in each of the plurality of offshore converter stations and each of the plurality of onshore converter units,
for each loop:
a positive terminal of the busbar of the onshore direct-current switch station is connected to positive terminals of two or more onshore converter units of the plurality of onshore converter units via a first direct-current overhead line in the loop, a negative terminal of the busbar is connected to negative terminals of the onshore converter units which are connected to the first direct-current overhead line in the loop via a second direct-current overhead line in each loop,
positive terminals of the onshore converter units in one loop are connected with each other via a third direct-current overhead line, and negative terminals of the onshore converter units in one loop are connected with each other via a fourth direct-current overhead line, and
for each loop: the positive terminal of the busbar is connected to a positive terminal of one offshore converter station of the plurality of offshore converter stations via a first direct-current cable in the loop, and the negative terminal of the busbar is connected to a negative terminal of the offshore converter station which is connected to the first direct-current cable in the loop via a second direct-current cable in the loop.

5. The system according to claim 1, wherein a symmetric monopole topology is employed in each of the plurality of offshore converter stations and each of the plurality of onshore converter units,
for each loop:
a positive terminal of the busbar of the onshore direct-current switch station is connected to a positive terminal of at least one onshore converter unit of the plurality of onshore converter units via a first direct-current overhead line in the loop, and a negative terminal of the busbar is connected to a negative terminal of the onshore converter unit which is connected to the first direct-current overhead line in the loop via a second direct-current overhead line in the loop,
a direct-current side of the onshore converter unit in the loop is connected to a direct-current side of at least one onshore converter unit in another loop, positive terminals of all onshore converter units are connected with each other via a third direct-current overhead line, and negative terminals of all onshore converter units are connected with each other via a fourth direct-current overhead line, and
for each loop: the positive terminal of the busbar is connected to a positive terminal of one offshore converter station of the plurality of offshore converter stations via a first direct-current cable in the loop, and the negative terminal of the busbar is connected to a negative terminal of the offshore converter station which is connected to the first direct-current cable in the loop via a second direct-current cable in the loop.

6. The system according to claim 4 or 5, wherein the onshore converter unit is provided with a direct-current high speed parallel switch at an outlet of the onshore converter unit being connected to the third direct-current overhead line, and the onshore converter unit is provided with another direct-current high speed parallel switch at an outlet of the onshore converter unit being connected to the fourth direct-current overhead line.

7. The system according to claim 1, wherein a bipolar topology is employed in each of the plurality of offshore converter stations and each of the plurality of onshore converter units,
for each loop:
a positive terminal of the busbar of the onshore direct-current switch station is connected to positive terminals of two or more onshore converter units of the plurality of onshore converter units via a first direct-current overhead line in the loop, a negative terminal of the busbar is connected to negative terminals of the onshore converter units which are connected to the first direct-current overhead line in the loop via a second direct-current overhead line in the loop, and a neutral terminal of the busbar is connected to neutral terminals of the onshore converter units via a fifth direct-current overhead line in the loop,
the neutral terminal of the busbar is connected to the fifth direct-current overhead line via an alternating-current circuit breaker, and the neutral terminals of the onshore converter units are connected to the fifth direct-current overhead line via alternating-current circuit breakers,
the positive terminals of the onshore converter units in one loop are connected with each other via a third direct-current overhead line, the negative terminals of the onshore converter units in one loop are connected with each other via a fourth direct-current overhead line, and the neutral terminals of the onshore converter units in one loop are connected with each other via a sixth direct-current overhead line, and
for each loop: the positive terminal of the busbar is connected to a positive terminal of one offshore converter station of the plurality of offshore converter stations via a first direct-current cable in the loop, the negative terminal of the busbar is connected to a negative terminal of the offshore converter station which is connected to the first direct-current cable in the loop via a second direct-current cable in the loop, the neutral terminal of the busbar is connected to a neutral terminal of the offshore converter station which is connected to the first direct-current cable in the loop via a third direct-current cable in the loop, and the neutral terminal of the busbar is connected to the third direct-current cable via another alternating-current circuit breaker.

8. The system according to claim 1, wherein a bipolar topology is employed in each of the plurality of offshore converter stations and each of the plurality of onshore converter units,
for each loop:
a positive terminal of the busbar of the onshore direct-current switch station is connected to a positive terminal of at least one onshore converter unit of the plurality of onshore converter units via a first direct-current overhead line in the loop, a negative terminal of the busbar is connected to a negative terminal of the onshore converter unit which is connected to the first direct-current overhead line in the loop via a second direct-current overhead line in the loop, and a neutral terminal of the busbar is connected to a neutral terminal of the onshore converter unit via a fifth direct-current overhead line in the loop,
the neutral terminal of the busbar is connected to the fifth direct-current overhead line via an alternating-current circuit breaker, and the neutral terminal of the onshore converter unit is connected to the fifth direct-current overhead line via another alternating-current circuit breaker,
a direct-current side of the onshore converter unit in the loop is connected to a direct-current side of at least one onshore converter unit in another loop, positive terminals of all onshore converter units are connected with each other via a third direct-current overhead line, negative terminals of all onshore converter units are connected with each other via a fourth direct-current overhead line, and neutral terminals of all onshore converter units are connected with each other via a sixth direct-current overhead line, and
for each loop: the positive terminal of the busbar is connected to a positive terminal of one offshore converter station of the plurality of offshore converter stations via a first direct-current cable in the loop, the negative terminal of the busbar is connected to a negative terminal of the offshore converter station which is connected to the first direct-current cable in the loop via a second direct-current cable in the loop, the neutral terminal of the busbar is connected to a neutral terminal of the offshore converter station which is connected to the first direct-current cable in the loop via a third direct-current cable in the loop, and the neutral terminal of the busbar is connected to the third direct-current cable via an alternating-current circuit breaker.

9. The system according to claim 7 or 8, wherein the onshore converter unit is provided with a direct-current high speed parallel switch at an outlet of the onshore converter unit being connected to the third direct-current overhead line, the onshore converter unit is provided with another direct-current high speed parallel switch at an outlet of the onshore converter unit being connected to the fourth direct-current overhead line, and the onshore converter unit is provided with an alternating-current circuit breaker at an outlet of the onshore converter unit being connected to the sixth direct-current overhead line.

10. The system according to claim 1, wherein the alternating-current sides of two or more onshore converter units of the plurality of onshore converter units are connected with each other.
